# EUROPEAN PATENT SPECIFICATION

(11) **EP 4 058 631 B1**
(45) Date of publication and mention of the grant of the patent: **27.03.2024**
(21) Application number: 20803188.0
(22) Date of filing: 12.11.2020
(51) Int. Cl.: D21H 11/18, C08B 11/12, C08L 1/28, D21H 11/20, D21H 27/10, D21C 9/00, D21H 17/64, D21H 25/02

(54) **METHOD OF PRODUCING A SHEET COMPRISING CHEMICALLY MODIFIED CELLULOSE FIBRES**
VERFAHREN ZUR HERSTELLUNG EINER FOLIE MIT CHEMISCH MODIFIZIERTEN CELLULOSEFASERN
PROCÉDÉ DE PRODUCTION D'UNE FEUILLE COMPRENANT DES FIBRES DE CELLULOSE CHIMIQUEMENT MODIFIÉES

(30) Priority: 12.11.2019 EP 19208623
(43) Date of publication of application: 21.09.2022
(73) Proprietor: Billerud Aktiebolag (publ), 169 27 Solna (SE)
(72) Inventor: NADERI, Ali, 732 33 Arboga (SE); LARSSON, Johan, 805 98 Gävle (SE)
(74) Representative: Kransell & Wennborg KB
(86) International application number: PCT/EP2020/081882
(87) International publication number: WO 2021/094439

(56) References cited:
- WO-A1-2018/189698
- JP-A- 2020 165 036
- CHEN YUFEI ET AL: "Comparative characteristics of TEMPO-oxidized cellulose nanofibers and resulting nanopapers from bamboo, softwood, and hardwood pulps", CELLULOSE, SPRINGER NETHERLANDS, NETHERLANDS, vol. 24, no. 11, 8 September 2017 (2017-09-08), pages 4831-4844, XP036367492, ISSN: 0969-0239, DOI: 10.1007/S10570-017-1478-4 [retrieved on 2017-09-08]
- KUMAR VINAY ET AL: "Comparison of nano- and microfibrillated cellulose films", CELLULOSE, SPRINGER NETHERLANDS, NETHERLANDS, vol. 21, no. 5, 19 July 2014 (2014-07-19), pages 3443-3456, XP035383539, ISSN: 0969-0239, DOI: 10.1007/S10570-014-0357-5 [retrieved on 2014-07-19]
- GALINA RODIONOVA ET AL: "TEMPO-oxidized cellulose nanofiber films: effect of surface morphology on water resistance", CELLULOSE, KLUWER ACADEMIC PUBLISHERS (DORDRECHT), NL, vol. 19, no. 4, 22 May 2012 (2012-05-22), pages 1115-1123, XP035070673, ISSN: 1572-882X, DOI: 10.1007/S10570-012-9721-5
- LOURENÇO ANA F ET AL: "Influence of TEMPO-oxidised cellulose nanofibrils on the properties of filler-containing papers", CELLULOSE, SPRINGER NETHERLANDS, NETHERLANDS, vol. 24, no. 1, 17 November 2016 (2016-11-17), pages 349-362, XP036128535, ISSN: 0969-0239, DOI: 10.1007/S10570-016-1121-9 [retrieved on 2016-11-17]

## Description

### TECHNICAL FIELD

The present disclosure relates to the production of cellulose-based sheets having barrier properties.

### BACKGROUND

Recent advances in science and technology has created an environmental consciousness that shifted the societal and industrial focus towards green products and sustainable processes. This new approach was further fuelled by the scarcity of oil reserves, which gave an incentive to replace oil-based polymeric materials with the renewable and biodegradable materials. On the other hand, considering the fact that it was the excellent material properties and good processability of oil-based polymeric materials that established their market position, it is foreseeable that completely replacing these materials with their natural counterparts will not be an easy task.

Good barrier properties and processability, together with resistance to different environments and transparency are just some of the desired qualities for commonly used packaging materials, and oil-based polymeric materials indeed provide these qualities to a sufficient extent. To replace oil-based materials with renewable and bio-based materials, it is desirable to reach at least similar performance levels, and at a similar cost. One way to readily achieve this goal is to use naturally abundant materials with existing industrially established large-scale production and processing protocols. In this respect, packaging grade papers are very promising candidates to facilitate this transformation from non-renewable to renewable while keeping a similar cost, since it is made of naturally occurring cellulose-rich fibres in already existing processes in the pulp and paper industry.

Besides being one of the most abundant biopolymers on Earth, cellulose attracts considerable attention due to its strength and stiffness combined with low weight, biodegradability and renewability. One of the promising new material streams of cellulose is the production and use of cellulose nanofibrils (CNFs) prepared from wood biomass. CNFs have desired properties, such as providing strong and transparent barrier films for applications such as packaging. An important feature of CNFs is their hydrophilicity, which is a great advantage for processing in aqueous media. However, this affinity for water of CNFs is also the reason for very long dewatering times, or energy demanding evaporation protocols, which to a large extent is what inhibits the feasible production of dry CNF-based materials on an industrial scale.

Chen, Yufei, et al. "Comparative characteristics of TEMPO-oxidized cellulose nanofibers and resulting nanopapers from bamboo, softwood, and hardwood pulps." Cellulose 24.11 (2017): 4831-4844 describes production of TEMPO-oxidized cellulose nanofibers and nanopapers produced therefrom.

Kumar, Vinay, et al. "Comparison of nano-and microfibrillated cellulose films." Cellulose 21.5 (2014): 3443-3456 describes a comparative study between films produced from nano- and microfibrillated cellulose.

Rodionova, Galina, Oyvind Eriksen, and Oyvind Gregersen. "TEMPO-oxidized cellulose nanofiber films: effect of surface morphology on water resistance." Cellulose 19.4 (2012): 1115-1123 describes films produced from TEMPO-oxidized cellulose nanofibers.

JP 2020 165036 A 8 discloses TEMPO-oxidized nanocellulose and carboxymethylated nanocellulose as strength agents in paper or paperboard.

Lourenqo, Ana F., et al. "Influence of TEMPO-oxidised cellulose nanofibrils on the properties of filler-containing papers." Cellulose 24.1 (2017): 349-362 discloses TEMPO-oxidized cellulose nanofibrils as additives for filler flocculation and retention in papermaking.

WO)2012/007363 and WO01/29309 disclose the production of papers comprising anionically modified cellulose fibres.

### SUMMARY

An objective of the present disclosure is thus to provide a method of efficient and industrially feasible production of cellulose-based barriers.

The inventor has found that the objective can be met by introducing chargeable groups in cellulose fibres to a certain degree without breaking up the fibre structure to the extent that (substantial) fibrillation occurs.

There is thus provided a method of producing a sheet having a density of 0.6-1.3 g/cm³ measured according to ISO 534:2011, comprising chemically modified cellulose fibres, wherein the method comprises:
a. providing chemically modified cellulose fibres comprising a chargeable moiety, wherein charge density measured according to SCAN-CM 65:02 of the chemically modified cellulose fibres is 1200-2400 µeq/g;
b. forming a fibre web by dewatering a slurry comprising the chemically modified cellulose fibres on a forming wire ; and
c. drying the fibre web to obtain the sheet,

with the proviso that no carboxymethyl cellulose (CMC) is added to the chemically modified cellulose fibres during or prior to step b, wherein
the chemically modified cellulose fibres have undergone oxidation, alkoxylation, phosphorylation, sulfoethylation or sulfonation to introduce the chargeable moiety or
a reaction introducing at least one quaternary amine, wherein
the chemically modified cellulose fibres constitutes at least 80 wt.% (dry) of the sheet.

There is also provided a sheet formed according to the above method.

### DESCRIPTION

The present disclosure provides a method for producing a sheet having a density of 0.6-1.3 g/cm³ measured according to ISO 534:2011, comprising chemically modified cellulose fibres, wherein the method comprises:
a. providing chemically modified cellulose fibres comprising a chargeable moiety, wherein charge density measured according to SCAN-CM 65:02 of the chemically modified cellulose fibres is 1200-2400 µeq/g;
b. forming a fibre web by dewatering a slurry comprising the chemically modified cellulose fibres on a forming wire; and
c. drying the fibre web to obtain the sheet,

with the proviso that no carboxymethyl cellulose is added to the chemically modified cellulose fibres during or prior to step b, wherein
the chemically modified cellulose fibres have undergone oxidation, alkoxylation, phosphorylation, sulfoethylation or sulfonation to introduce the chargeable moiety or
a reaction introducing at least one quaternary amine, wherein
the chemically modified cellulose fibres constitutes at least 80 wt.% (dry) of the sheet.

Steps b) and c) are suitably carried out on a full-scale paper machine, i.e. a paper machine running at a speed of at least 300 m/min and having a trim width of at least 1500 mm, such as at least 3000 mm. Consequently, only a very limited period of time is available for the completion of steps b) and c) of the process.

Step c) may be carried out in the drying section of a paper machine. Consequently, step c) may be carried out by means of heated cylinders, such as steam-heated cylinders, and/or contactless drying, preferably using hot air and/or infrared radiation. Step c) may further comprise a step of calendering the fibre web, preferably conducted after the drying of the fibre web.

Upstream the drying section of the paper machine, there is typically arranged a press section. In such case, pressing is conducted between steps b) and c). The pressing section may comprise several press nips. The dry matter content of the web after the press section may be at least 40%.

The chemically modified fibres have undergone a chemical treatment selected from the group consisting of oxidation, alkoxylation, phosphorylation, sulfonation and sulfoethylation to introduce the chargeable moiety. Typically, the chemically modified cellulose fibres have undergone oxidation or alkoxylation. The oxidation may be TEMPO-oxidation or periodate oxidation followed by chlorite oxidation. The alkoxylation is preferably carboxymethylation.

In a preferred embodiment, the chemical modification is selected from TEMPO-oxidation, alkoxylation, phosphorylation sulfonation and sulfoethylation. In such an embodiment, periodate oxidation and other ways of breaking the C₂-C₃ of D-glucose units are excluded.

The chemically modified fibres may have a water retention value (WRV) of 15-40 g/g, more preferably 19-40 g/g, measured according to a modified version of SCAN-C 62:00, wherein the modifications to the standard are disclosed in Example 6 of the present disclosure.

The sheet typically has a grammage according to ISO 536:2012 of 5-100 g/m², such as 5-70 g/m², such as 10-70 g/m², such as 10-60 g/m², such as 35-60 g/m², such as 42-60 g/m², preferably 45-60 g/m², more preferably 50-60 g/m².

The sheet has a density of 0.6-1.3 g/cm3, such as 0.7-1.3 g/cm3, such as 0.8-1.2, such as 1.0-1.2 g/cm³ measured according to ISO 534:2011. The density is beneficial for the barrier properties.

The sheet typically has a thickness of 1-100 µm, such as 5-70 µm, such as 10-70 µm, such as 10-50 µm, such as 20-60 µm measured according to ISO 534:2011.

In one embodiment, a crosslinking agent is added in or after step b. The crosslinking agent may be a divalent cation, preferably a divalent metal ion.

The crosslinking agent is preferably added as an aqueous composition.

The addition of the aqueous composition may be carried out by means of a size press or a film press. Alternatively, the aqueous composition may be sprayed onto the fibre web.

If the aqueous composition is added by means of a size press or film press, is typically has a viscosity of 10-1000 mPas, preferably 10-300 mPas, when measured as dynamic viscosity with a Brookfield rotational viscometer using spindle no.4 at 100 rpm and 25 °C according to the Brookfield instruction sheet.

According to another embodiment, a curtain coater or a direct rod coater is used for the application of the aqueous composition. In such case, the viscosity of the aqueous composition is typically 100-800 mPas when measured as dynamic viscosity with a Brookfield rotational viscometer using spindle no.4 at 100 rpm and 25 °C according to the Brookfield instruction sheet.

According to yet another embodiment, a blade coater is used for the application of the aqueous composition. In such case, the viscosity of the aqueous composition is typically 400-1500 mPas when measured as dynamic viscosity with a Brookfield rotational viscometer using spindle no.4 at 100 rpm and 25 °C according to the Brookfield instruction sheet.

To facilitate the application (and to obtain the desired viscosity), the aqueous composition may comprise a polymer, such as starch, carboxymethyl cellulose (CMC), polyvinyl alcohol (PVOH) or microfibrillated cellulose (MFC). In addition to the polymer, the composition may comprise a rheology modifier.

In the context of the present disclosure, MFC means nano-scale cellulose particle fibres or fibrils with at least one dimension less than 100 nm. MFC comprises partly or totally fibrillated cellulose or lignocellulose fibres. The liberated fibrils have a diameter less than 100 nm, whereas the actual fibril diameter or particle size distribution and/or aspect ratio (length/width) depends on the source and the manufacturing methods. Depending on the source and the manufacturing process, the length of the fibrils can vary from around 1 to more than 10 micrometers. A coarse MFC grade might contain a substantial fraction of fibrillated fibres, i.e. protruding fibrils from the tracheid (cellulose fibre), and with a certain amount of fibrils liberated from the tracheid. There are different synonyms for MFC such as cellulose microfibrils, fibrillated cellulose, nanofibrillated cellulose (NFC), fibril aggregates, nanoscale cellulose fibrils, cellulose nanofibres, cellulose nanofibrils (CNF), cellulose microfibres (CMF), cellulose fibrils, microfibrillar cellulose, microfibril aggregrates and cellulose microfibril aggregates.

Carboxymethyl cellulose (CMC) is a cellulose derivative with carboxymethyl groups (-CH₂-COOH) bound to some of the hydroxyl groups of the glucopyranose monomers that make up the cellulose backbone. It is often used as its sodium salt, sodium carboxymethyl cellulose. It is a non-fibrous polymer and, thus, not the same as carboxymethylated cellulose fibres or carboxymethylated cellulose fibrils.

When the crosslinking agent is a divalent cation, its concentration in the aqueous composition is preferably below 100 mM (e.g 0.1-90 mM), such as 50 mM or lower (e.g. 0.1-50 mM, such as 0.1-40 mM, such as 0.1-30 mM, such as 0.1-20 mM, such as 0.1-10 mM).

The divalent cation is preferably selected from the group consisting of Zn²⁺, Ca²⁺, Cu²⁺ and Mg²⁺. Zn²⁺ and Ca²⁺ are particularly preferred.

Alternatively, the chemically modified cellulose fibres have undergone a reaction introducing at least one quaternary amine. In such case, a crosslinker that is a multivalent anion may be used. Examples of multivalent anions are phosphate ions or polycarboxylate ions. The introduction of quaternary amines is preferably conducted via a compound that both contains a group reacting with hydroxyl groups to form covalent bonds as well as a quaternary ammonium group. The introduction may also be conducted via a compound that both contains a group reacting with hydroxyl groups to form covalent bonds and a group that can further react to attach an amine. Preferably, the group reacting with hydroxyl groups is selected from any of epoxy, halohydrin capable of forming epoxy, active halogen, isocyanate, active vinyl or methylol. Examples of compounds bearing a group reacting with hydroxyl groups to form covalent bonds as well as a quaternary ammonium group are 2,3-epoxypropyl trimethylammonium chloride (EPTMAC), chlorocholine chloride (ClChCl), glycidyl trimethylammonium chloride and 3-chloro-2-hydroxypropyl trimethyl ammonium chloride. It may be advantageous to crosslink cationic amine-functional fibres since such functionalization chemistry is readily available on an industrial scale.

The chemically modified fibres have a charge density measured according to SCAN-CM 65:02 of 1200-2400 µeq/g, such as 1200-2000 µeq/g, such as 1200-1800 µeq/g, such as 1500-2000 µeq/g, such as 1600-1900 µeq/g.

The chemically modified fibres are preferably prepared from pulp of virgin wood fibres, preferably never-dried wood fibres, preferably bleached wood fibres, such as fibres comprising less than 10 wt.% (dry) lignin, such as dissolving pulp.

The chemically modified fibres typically have a Schopper-Riegler (°SR) value of 10-35, such as 15-30 °SR measured according to ISO 5267-1:1999.

Accordingly, in one embodiment the method for producing a sheet having a density of 0.6-1.3 g/cm³ measured according to ISO 534:2011 of chemically modified cellulose fibres comprises the steps of:
- chemically modifying virgin wood fibres to obtain chemically modified cellulose fibres comprising a chargeable moiety, wherein charge density measured according to SCAN-CM 65:02 of the chemically modified cellulose fibres is 1200-2400 µeq/;
- forming a fibre web by dewatering a slurry comprising the chemically modified cellulose fibres on a forming wire, preferably on a paper machine;
- optionally, pressing the fibre web, suitably in a press section of a paper machine;
- optionally, crosslinking the fibre web with a crosslinking agent comprising a multivalent ion
- drying the fibre web to obtain the sheet, preferably in the drying section of a paper machine, wherein
   the chemically modified cellulose fibres have undergone oxidation, alkoxylation, phosphorylation, sulfoethylation or sulfonation to introduce the chargeable moiety or
   a reaction introducing at least one quaternary amine, wherein
   the chemically modified cellulose fibres constitutes at least 80 wt.% (dry) of the sheet; and
- optionally, calendering the sheet.

The sheet produced by the method of the present disclosure is an oxygen barrier, exhibiting a normalized oxygen transmission rate (OTRₘᵢₗ) of less than 10 ml m-² d⁻¹ bar⁻¹, such as less than 4 ml m⁻² d⁻¹ bar⁻¹, at 50% RH according to standards ASTM D3985 and F1927. Typically the normalized oxygen transmission rate (OTRₘᵢₗ) is less than 50 ml m⁻² d⁻¹ bar⁻¹ at 80% RH according to standards ASTM D3985 and F1927. Normalization to a thickness of 25 µm is conducted by determination of thickness of the sheet with scanning electron microscope (SEM), dividing the thickness with 25 (µm), and multiplying with obtained OTR-value from the measurement.

Preferably, no base that causes fibrillation of the chemically modified fibres is added to the fibre web.

### EXAMPLES

### Example 1

### Carboxymethylation of fibres

A commercial never-dried TCF-bleached sulfite dissolving pulp (trade name: Dissolving Plus) from a mixture of Norway spruce (60%) and Scottish pine (40%) was obtained from Domsjö Fabriker (Domsjö Mill, Sweden). The never-dried fibres (50 g dry weight) were dispersed in de-ionized water (≈ 1.5% (w/w)) at 10 000 revolutions by using a laboratory pulper. The fibres were then solvent exchanged to ethanol by washing the fibres in one litre of ethanol four times with a filtering step in between.

After the solvent exchange, the fibres were impregnated for 30 min with a solution of monochloroacetic acid (MCA) (see Table 1) in 2-propanol (178 g). The fibres were then added in portions to a solution consisting of NaOH (see Table 1; amount added is 0.26 mol/mol ratio MCA/NaOH), methanol (180 g), 2-propanol (655 g) and de-ionized water (57 g) that had been heated just below the boiling temperature of the solution. The carboxymethylation reaction was allowed to continue for one hour. Following the carboxymethylation step, the fibres were filtrated and washed in three steps. First, the fibres were washed with de-ionized water (33 litres). Thereafter, the fibres were washed with 3.3 litres of acetic acid (0.1 M) and finally with de-ionized water (17 litres). The fibres were then impregnated with 3.3 litres of HCl solution in de-ionized water (pH=2) for 5 minutes followed by washing with de-ionized water until a conductivity of below 5 µS/cm was obtained. the dissolving pulps were modified into carboxymethylated fibres with degrees of substitution (DS) in the range of 0.05-0.3; see Table 1.

**Table 1. Charged reactants for varied D.S. for the carboxymethylation on fibres.**

| **D.S.** | **Monochloroacetic acid (g)** | **NaOH (g)** |
|---|---|---|
| **0.05** | 2.3 | 3.7 |
| **0.1** | 4.6 | 7.4 |
| **0.15** | 6.9 | 11.1 |
| **0.2** | 9.2 | 14.7 |
| **0.3** | 13.8 | 22.1 |

### Example 2

### Production of CNF

The carboxymethylated pulps produced according to Ex. 1 were dispersed in water (to a consistency of 0.5 wt%) by a propeller mixer for one hour. The suspensions were thereafter microfluidized (Microfluidizer M-110EH, Microfluidics Corp., USA) by passing the slurries one time at 1500 bar through two Z-shaped chambers with diameters of 200 µm and 100 µm, respectively.

### Example 3a

### Preparation of CNF films

Suspensions of carboxymethylated CNF (0.1 wt%) with different D.S. (0.05, 0.15 and 0.30) were produced by mixing CNF produced according to Ex. 2 with water using a magnetic stirrer for about 18 h at 750 rpm. Films were, thereafter, prepared by vacuum filtration of the suspension using 0.65 µm DVPP filters (supplied by Millipore), followed by drying, in constrained form, in an oven for seven hours at 50 °C to a grammage of 30 g/m².

### Example 3b

### Preparation of pulp films

Suspensions of carboxymethylated pulps (0.3 wt%) with different D.S. (0.05, 0.15 and 0.30) were produced by mixing pulp produced according to Ex. 1 with water using a magnetic stirrer for about 18 h at 750 rpm. Films were thereafter, prepared by vacuum filtration of the suspension using 0.65 µm DVPP filters (supplied by Millipore), followed by drying, in constrained form, in an oven for seven hours at 50 °C to a grammage of 10 and 30 g/m².

### Example 3c

### Crosslinking of pulp films using Ca²⁺ ions

A film produced according to Ex. 3b with a grammage of 30 g/m² was dipped for 5 seconds in a solution containing calcium chloride dihydrate (1 mM) acting as a crosslinker, and the crosslinked film was thereafter dried (50 °C; 4 h). No washing was performed between the dipping and the drying.

### Example 4

### TEMPO-oxidation of fibres

A never-dried Softwood Bleached Kraft pulp (SBKP) was used. The fibres (30 g dry content) were suspended (30 g/L) and pH set to 2 with HCl. After 20 minutes the fibres were washed with de-ionized water until a conductivity of below 5 µS/cm had been obtained. The fibres were thereafter re-suspended (10 g/L) and refined using a PFI refiner to 2000 revolutions.

To 3 L water, i.e. 30 g beated fibres (dry weight), TEMPO (0.48 g) and NaBr (3 g) were added, the temperature set to 23 °C and stirring rate of 300 rpm until the TEMPO had solubilized (around 30 minutes). 300 ml of a sodium hypochlorite (NaClO) solution (2.5 M; pH 11.6) was added drop-wise to the pulp dispersion and pH kept at 10. pH adjustment was made every 10 minutes for 5 hours until the reaction was stopped by filtration and further addition of 2 litres of water. The fibre were subsequently washed with de-ionized water until a conductivity of below 5 µS/cm had been obtained.

### Example 5

### Evaluation of dewatering rate

The relative speed of dewatering of the carboxymethylated pulps and corresponding CNFs were studied based on the following. 120 grams of 0.03 wt% suspensions based on carboxymethylated pulps and corresponding CNFs were prepared by diluting the concentrated systems with deionized water and mixing overnight. The time for removing the excess water of the different systems by vacuum filtration over a 0.65 µm DVPP filters (supplied by Millipore) was recorded. For the carboxymethylated pulp the dewatering time is 13 minutes, and for the corresponding CNF the filtration time is 80 minutes.

### Example 6

### Water retention value

The water retention value (WRV) was measured according to a modified version of SCAN-C 62:00.

According to the standard, the pulp suspension is diluted to a concentration of 2-5 g/L, and thereafter dewatered to 5-15 % dry content in either a Büchnell funnel of 65 mm inner diameter ("Alternative 1") or in a test-pad former ("Alternative 2").

Due to the gel-like consistency of the highly charged pulps a dry matter content of 5-15% is not possible to measure WRV on. The modification of the standard is that the pulp was provided with a dry matter content of 3-4 % and the analysis was performed directly without dewatering. Moreover, in the second centrifugation the wire used was 38 µm instead of 90 µm.

### Example 7

### Oxygen transmission rate

The transmission rate (OTR) was measured on 5 cm² samples using a MOCON OX-TRAN 2/21 according to the ASTM D3985 and ASTM F1927 standards. The OTR measurements were performed at 23° C and 50% RH or 80% RH, using the same relative humidity on both sides of the sample.

**Table 2. The OTR of films based on carboxymethylated pulps and corresponding CNFs, at different degree of substitution (DS) and grammages as well as films made from TEMPO-oxidized fibres.**

| | Particle type | D.S. | Charge density (µeq/g) | WRV (g/g) | Grammage (g/m²) | Thickness (µm) | Density (g/cm³) | OTR (50% RH) (ml m⁻² d⁻¹ bar⁻¹) | OTR (80% RH) (ml m⁻² d⁻¹ bar⁻¹) |
|---|---|---|---|---|---|---|---|---|---|
| Ex. 3a¹ | CNF | 0.05 | 300* | - | 30 | 25±2 | 1.2*** | 4 | 36 |
| Ex. 3a¹ | CNF | 0.15 | 900* | - | 30 | 25±2 | 1.2*** | 7 | 88 |
| Ex. 3a¹ | CNF | 0.3 | 1800* | - | 30 | 25±2 | 1.2*** | 2 | 94 |
| Ex. 3b¹ | Pulp | 0.05 | 300* | 3 | 30 | 25±2 | 1.2 *** | Over range | N.M. |
| Ex. 3b¹ | Pulp | 0.15 | 900* | <15** | 30 | 25±2 | 1.2 *** | Over range | N.M. |
| Ex. 3b² | Pulp | 0.3 | 1800* | 24 | 10 | 25±2 | 0.4*** | 2 | 116 |
| Ex. 3b² | Pulp | 0.3 | 1800* | 24 | 30 | 25±2 | 1.2*** | 2 | 51 |
| Ex. 3c² | Pulp (crosslinked) | 0.3 | 1800* | 24 | 30 | 25±2 | 1.2*** | 2 | 30 |
| Ex. 4² | Pulp | N/A | 1673 ± 20 | 24 | 30 | 36.6 ± 7.5 | 0.82 ± 0.02 | 1.9 ± 0.25 | 33 ± 9 |

| | | | | | | | | | |
|---|---|---|---|---|---|---|---|---|---|
| N.M. means not measured; Comparative example; ²Inventive example * Estimate partly based on measurements showing that D.S. = 0.2 corresponds to 1200 µeq/g and D.S. = 0.4 corresponds to 2400 µeq/g. ** The estimate is partly based on measurements showing that D.S. = 0.2 corresponds to 19 g/g and D.S. = 0.3 corresponds to 24 g/g. *** Estimated based on the thickness of 25 µm and grammage of 10 or 30 g/m². | | | | | | | | | |

## Claims

1. A method of producing a sheet having a density of 0.6-1.3 g/cm³ measured according to ISO 534:2011, the sheet comprising chemically modified cellulose fibres, wherein the method comprises:
a. providing chemically modified cellulose fibres, wherein charge density measured according to SCAN-CM 65:02 of the chemically modified cellulose fibres is 1200-2400 µeq/g;
b. forming a fibre web by dewatering a slurry comprising the chemically modified cellulose fibres on a forming wire; and
c. drying the fibre web to obtain the sheet,
with the proviso that no carboxymethyl cellulose (CMC) is added to the chemically modified cellulose fibres during or prior to step b, wherein
the chemically modified cellulose fibres have undergone oxidation, alkoxylation, phosphorylation, sulfoethylation or sulfonation to introduce the chargeable moiety
or
a reaction introducing at least one quaternary amine, wherein
the chemically modified cellulose fibres constitutes at least 80 wt.% (dry) of the sheet.

2. The method according to claim 1, wherein the charge density measured according to SCAN-CM 65:02 of the chemically modified cellulose fibres is 1200-2000 µeq/g, such as 1200-1800 µeq/g, such as 1500-2000 µeq/g.

3. The method according to any one of the preceding claims further comprising adding a crosslinking agent comprising a divalent metal ion during or after step b, which divalent metal ion may be selected from the group consisting of Zn²⁺, Ca²⁺ and Mg²⁺.

4. The method according to any one of the preceding claims, wherein the chemically modified cellulose fibres constitutes at least 90 wt.% (dry) of the sheet, such as at least 95 wt.% (dry) of the sheet.

5. The method according to any one of claims 1-4, wherein the chemically modified cellulose fibres have undergone carboxymethylation that has been carried out to a degree of substitution (DS) of 0.2-0.4.

6. The method according to any one of claims 1-4, wherein the chemically modified cellulose fibres have undergone oxidation or alkoxylation.

7. The method according to any one of the preceding claims, wherein the sheet has a grammage according to ISO 536:2012 of 5-100 g/m², such as 5-70 g/m², such as 10-70 g/m², such as 10-60 g/m², such as 35-60 g/m², such as 42-60 g/m², preferably 45-60 g/m², more preferably 50-60 g/m².

8. The method according to any one of the preceding claims, wherein step c is preceded by a step of pressing the fibre web.

9. The method according to any one of the preceding claims, wherein the chemically modified cellulose fibres were prepared by chemically modifying bleached wood fibres.

10. The method according to any one of the preceding claims, wherein the chemically modified cellulose fibres were prepared by chemically modifying fibres comprising less than 10 wt.% (dry) lignin.

11. The method according to any one of the preceding claims, wherein the chemically modified cellulose fibres were prepared by chemically modifying bleached fibres of dissolving pulp.

12. The method according to any one of the preceding claims, wherein the sheet has a density of 0.7-1.3 g/cm3, such as 0.8-1.2 g/cm³, such as 1.0-1.2 g/cm3 measured according to ISO 534:2011.

13. The method according to any one of the preceding claims, wherein the sheet has a thickness of 1-100 µm, such as 5-70 µm, such as 10-50 µm measured according to ISO 534:2011.

14. The method according to any one of the preceding claims, wherein the sheet is an oxygen barrier, preferably wherein the normalized oxygen transmission rate (OTRₘᵢₗ) of the sheet is less than 50 ml m⁻² d⁻¹ bar⁻¹ at 80% RH according to standards ASTM D3985 and F1927.

15. A sheet produced according to the method of any one of claims 1-14, wherein the sheet is having a density of 0.6-1.3 g/cm³ measured according to ISO 534:2011 and wherein the normalized oxygen transmission rate (OTRₘᵢₗ) of the sheet is less than 10 ml m⁻² d⁻¹ bar⁻¹, such as less than 4 ml m⁻² d⁻¹ bar⁻¹, at 50% RH according to standards ASTM D3985 and F1927.

16. The sheet according to claim 15, wherein the normalized oxygen transmission rate (OTRₘᵢₗ) of the sheet is less than 50 ml m⁻² d⁻¹ bar⁻¹ at 80% RH according to standards ASTM D3985 and F1927.

## Patentansprüche

1. Verfahren zur Herstellung einer Folie mit einer Dichte von 0,6-1,3 g/cm³, gemessen gemäß ISO 534:2011, wobei die Folie chemisch modifizierte Cellulosefasern aufweist, wobei das Verfahren aufweist:
a. Bereitstellen chemisch modifizierter Cellulosefasern, wobei die Ladungsdichte der chemisch modifizierten Cellulosefasern 1200-2400 ueq/g beträgt, gemessen gemäß SCAN-CM 65:02;
b. Bilden einer Faserbahn durch Entwässern einer Aufschlämmung, die die chemisch modifizierten Cellulosefasern aufweist, auf einem Formsieb; und
c. Trocknen der Faserbahn, um die Folie zu erhalten, mit der Maßgabe, dass den chemisch modifizierten Cellulosefasern während oder vor Schritt b keine CarboxymethylCellulose (CMC) zugesetzt wird, wobei
die chemisch modifizierten Cellulosefasern einer Oxidation, Alkoxylierung, Phosphorylierung, Sulfoethylierung oder Sulfonierung unterzogen wurden zum Einbringen des aufladbaren Anteils,
oder
einer Reaktion, bei der mindestens ein quartäres Amin eingebracht wird, wobei
die chemisch modifizierten Cellulosefasern mindestens 80 Gew.-% (trocken) der Folie ausmachen.

2. Verfahren nach Anspruch 1, wobei die gemäß SCAN-CM 65:02 gemessene Ladungsdichte der chemisch modifizierten Cellulosefasern 1200-2000 ueq/g, beispielsweise 1200-1800 ueq/g, beispielsweise 1500-2000 ueq/g beträgt.

3. Verfahren nach einem der vorhergehenden Ansprüche, ferner aufweisend die Zugabe eines Vernetzungsmittels, das ein zweiwertiges Metallion aufweist, während oder nach Schritt b, wobei das zweiwertige Metallion aus der Gruppe ausgewählt sein kann, die aus Zn²⁺, Ca²⁺ und Mg²⁺ besteht.

4. Verfahren nach einem der vorhergehenden Ansprüche, wobei die chemisch modifizierten Cellulosefasern mindestens 90 Gew.-% (trocken) der Folie, beispielsweise mindestens 95 Gew.-% (trocken) der Folie, ausmachen.

5. Verfahren nach einem der Ansprüche 1-4, wobei die chemisch modifizierten Cellulosefasern einer Carboxymethylierung unterzogen wurden, die bis zu einem Substitutionsgrad (DS) von 0,2-0,4 durchgeführt wurde.

6. Verfahren nach einem der Ansprüche 1-4, wobei die chemisch modifizierten Cellulosefasern einer Oxidation oder Alkoxylierung unterzogen wurden.

7. Verfahren nach einem der vorhergehenden Ansprüche, wobei die Folie ein Flächengewicht gemäß ISO 536:2012 von 5-100 g/m², beispielsweise 5-70 g/m², beispielsweise 10-70 g/m², beispielsweise 10-60 g/m², beispielsweise 35-60 g/m², beispielsweise 42-60 g/m², vorzugsweise 45-60 g/m², noch bevorzugter 50-60 g/m², aufweist.

8. Verfahren nach einem der vorhergehenden Ansprüche, wobei dem Schritt c ein Schritt des Pressens der Faserbahn vorangeht.

9. Verfahren nach einem der vorhergehenden Ansprüche, wobei die chemisch modifizierten Cellulosefasern durch chemische Modifizierung gebleichter Holzfasern hergestellt wurden.

10. Verfahren nach einem der vorhergehenden Ansprüche, wobei die chemisch modifizierten Cellulosefasern durch chemische Modifizierung von Fasern hergestellt wurden, die weniger als 10 Gew.-% (trockenes) Lignin aufweisen.

11. Verfahren nach einem der vorhergehenden Ansprüche, wobei die chemisch modifizierten Cellulosefasern durch chemische Modifizierung gebleichter Fasern aus Auflösungszellstoff hergestellt wurden.

12. Verfahren nach einem der vorhergehenden Ansprüche, wobei die Folie eine Dichte von 0,7-1,3 g/cm³, beispielsweise 0,8-1,2 g/cm³, beispielsweise 1,0-1,2 g/cm³, gemessen gemäß ISO 534: 2011, aufweist.

13. Verfahren nach einem der vorhergehenden Ansprüche, wobei die Folie eine Dicke von 1-100 um, beispielsweise 5-70 um, beispielsweise 10-50 um, gemessen gemäß ISO 534:2011, aufweist.

14. Verfahren nach einem der vorhergehenden Ansprüche, wobei die Folie eine Sauerstoffbarriere darstellt, wobei die normalisierte Sauerstoffdurchlässigkeitsrate (OTRₘᵢₗ) der Folie vorzugsweise weniger als 50 ml m⁻² d⁻¹ bar⁻¹ beträgt, bei 80 % RH, gemäß den Standards ASTM D3985 und F1927.

15. Folie, die nach dem Verfahren nach einem der Ansprüche 1-14 hergestellt wurde, wobei die Folie eine Dichte von 0,6-1,3 g/cm³, gemessen gemäß ISO 534:2011, aufweist, und wobei die normalisierte Sauerstoffdurchlässigkeitsrate (OTRₘᵢₗ) der Folie weniger als 10 ml m⁻² d⁻¹ bar⁻¹, beispielsweise weniger als 4 ml m⁻² d⁻¹ bar⁻¹, beträgt, bei 50 % RH, gemäß den Standards ASTM D3985 und F1927.

16. Folie nach Anspruch 15, wobei die normalisierte Sauerstoffdurchlässigkeitsrate (OTRₘᵢₗ) der Folie weniger als 50 ml m⁻² d⁻¹ bar⁻¹ beträgt, bei 80 % RH, gemäß den Standards ASTM D3985 und F1927.

## Revendications

1. comprise entre 0,6 et 1,3 g/cm³ mesurée selon la norme ISO 534:2011, la feuille comprenant des fibres de cellulose chimiquement modifiées, dans lequel le procédé comprend :
a. la fourniture de fibres de cellulose chimiquement modifiées, dans lequel la densité de charge mesurée selon la norme SCAN-CM 65:02 des fibres de cellulose chimiquement modifiées est comprise entre 1 200 et 2 400 µeq/g ;
b. la formation d'une bande de fibres par déshydratation d'une boue comprenant les fibres de cellulose chimiquement modifiées sur un fil de formation ; et
c. le séchage de la bande de fibres pour obtenir la feuille,
à condition qu'aucune carboxyméthylcellulose (CMC) ne soit ajoutée aux fibres de cellulose chimiquement modifiées pendant ou avant l'étape b, dans lequel les fibres de cellulose chimiquement modifiées ont subi une oxydation, une alcoxylation, une phosphorylation, une sulfoéthylation ou une sulfonation afin d'introduire la fraction chargeable,
ou
une réaction introduisant au moins une amine quaternaire, dans lequel
les fibres de cellulose modifiées chimiquement constituent au moins 80 % en poids (sec) de la feuille.

2. Procédé selon la revendication 1, dans lequel la densité de charge mesurée selon la norme SCAN-CM 65:02 des fibres de cellulose chimiquement modifiées est comprise entre 1 200 et 2 000 µeq/g, par exemple comprise entre 1 200 et 1 800 µeq/g, par exemple comprise entre 1 500 et 2 000 ueq/g.

3. Procédé selon l'une quelconque des revendications précédentes comprenant en outre l'ajout d'un agent de réticulation comprenant un ion métallique divalent pendant ou après l'étape b, lequel ion métallique divalent peut être choisi dans le groupe constitué par Zn²⁺, Ca²⁺ et Mg²⁺.

4. Procédé selon l'une quelconque des revendications précédentes, dans lequel les fibres de cellulose modifiées chimiquement constituent au moins 90 % en poids (sec) de la feuille, par exemple au moins 95 % en poids (sec) de la feuille.

5. Procédé selon l'une quelconque des revendications 1 à 4, dans lequel les fibres de cellulose modifiées chimiquement ont subi une carboxyméthylation effectuée à un degré de substitution (DS) compris entre 0,2 et 0,4.

6. Procédé selon l'une quelconque des revendications 1 à 4, dans lequel les fibres de cellulose chimiquement modifiées chimiquement modifiées ont subi une oxydation ou une alcoxylation.

7. Procédé selon l'une quelconque des revendications précédentes, dans lequel la feuille a un grammage selon ISO 536:2012 compris entre 5 et 100 g/m², tel que compris entre 5 et 70 g/m², tel que compris entre 10 et 70 g/m², tel que compris entre 10 et 60 g/m², tel que compris entre 35 et 60 g/m², tel que compris entre 42 et 60 g/m², de préférence compris entre 45 et 60 g/m², plus préférentiellement compris entre 50 et 60 g/m².

8. Procédé selon l'une quelconque des revendications précédentes, dans lequel l'étape c est précédée d'une étape de pressage de la bande de fibres.

9. Procédé selon l'une quelconque des revendications précédentes, dans lequel les fibres de cellulose modifiées chimiquement ont été préparées en modifiant chimiquement des fibres de bois blanchies.

10. Procédé selon l'une quelconque des revendications précédentes, dans lequel les fibres de cellulose modifiées chimiquement ont été préparées en modifiant chimiquement des fibres comprenant moins de 10 % en poids (sec) de lignine.

11. Procédé selon l'une quelconque des revendications précédentes, dans lequel les fibres de cellulose modifiées chimiquement ont été préparées par modification chimique de fibres blanchies de pâte à dissolution.

12. Procédé selon l'une quelconque des revendications précédentes, dans lequel la feuille a une densité comprise entre 0,7 et 1,3 g/cm³, telle que comprise entre 0,8 et 1,2 g/cm³, telle que comprise entre 1,0 et 1,2 g/cm³ mesurée selon la norme ISO 534:2011.

13. Procédé selon l'une quelconque des revendications précédentes, dans lequel la feuille a une épaisseur comprise entre 1 et 100 um, telle que comprise entre 5 et 70 um, telle que comprise entre 10 et 50 um mesurée selon la norme ISO 534:2011.

14. Procédé selon l'une quelconque des revendications précédentes, dans lequel la feuille est une barrière à l'oxygène, de préférence dans lequel le taux de transmission d'oxygène normalisé (OTRₘᵢₗ) de la feuille est inférieur à 50 ml m⁻² d⁻¹ bar⁻¹ à 80 % d'humidité relative selon les normes ASTM D3985 et F1927.

15. Feuille produite suivant le procédé selon l'une des revendications 1 à 14, dans laquelle la feuille a une densité comprise entre 0,6 et 1,3 g/cm³ mesurée selon la norme ISO 534:2011 et dans laquelle le taux de transmission d'oxygène normalisé (OTRmiI) de la feuille est inférieur à 10 ml m⁻² d⁻¹ bar⁻¹, par exemple inférieur à 4 ml m⁻² d⁻¹ bar⁻¹, à 50 % d'humidité relative selon les normes ASTM D3985 et F1927.

16. Feuille selon la revendication 15, dans laquelle le taux de transmission d'oxygène normalisé (OTRmiI) de la feuille est inférieur à 50 ml m⁻² d⁻¹ bar⁻¹ à 80 % d'humidité relative selon les normes ASTM D3985 et F1927.
